# EUROPEAN PATENT APPLICATION

(11) **EP 1 615 351 A1**
(43) Date of publication of application: **11.01.2006**
(21) Application number: 04447173.8
(22) Date of filing: 09.07.2004
(51) Int. Cl.: H04B 3/14

(54) **Multistage equalizer**

(71) Applicant: VRIJE UNIVERSITEIT BRUSSEL, 1050 Brussel (BE)
(72) Inventor: Kuijk, Maarten, 2600 Berchem-Antwerpen (BE); Maillard, Xavier, 1670 Pepingen (BE)
(74) Representative: Bird, William Edward

(57) **Abstract**

A multistage equalizer filter is presented that, in case of overcompensation leads to an acceptable low level of additional jitter. It has non-saturating data-nodes and output nodes in each of the amplifying compensation stages (21a, 21b, 21c, 21d), even in the envisaged situations of overcompensation where acceptable additional jitter is specified. Up to an upper data frequency, the transfer function of each of the amplifying compensation stages (21a, 21b, 21c, 21d) is increasing at least for the last frequency decade. A special embodiment for implementing these conditions uses replica biasing allowing process variations and temperature variations to be taken into account. An auto-gain structure increases the robustness even further, and especially an auto-gain function driving the gain of all amplifying compensation stages (21a, 21b, 21c, 21d) in parallel is advised to be implemented. In this way, several types of equalizer filters can be designed, including fixed, programmable and self-adaptive ones, featuring the tuning tolerance due to allowed overcompensation.

## Description

### Technical field of the invention

The present invention relates to the field of data communication. More particularly, the present invention relates to devices and corresponding methods for multistage equalizer filtering in a line equalizer system, which restore the attenuated signals transmitted over a communication or transmission channel for a wide variety of communication or transmission channels with an acceptable amount of jitter. The present invention also relates to the use of the equaliser in communications system, e.g. in a modem.

### Background of the invention

An equalizer system in general compensates frequency dependent losses that a signal experiences when passing through a transmission channel. Transmission channels include, but are not limited to, a wire, a pair of wires, an optical fibre, the reading and writing channels of a storage device like a hard-disc or optical disc, a wireless connection such as a point-to-point or diffuse infra-red or radio connection. A pair of wires includes a twisted pair, a twinax coax or a differential transmission line on a printed circuit board.

The compensation level of an equalizer system in general can be self-adaptive, fixed or programmable e.g. by a voltage or via a set of switches. A self-adaptive equalizer system continuously estimates the matching compensation level. It typically includes an adaptable filter, a control loop and an output reconstruction unit.

EP-1392001 describes how to organise a control loop in an equalizer system such that self-adaptation is achieved, independently from the transmit amplitude and the transmitted bit pattern. A feed-back control signal is generated from the equalised output of an equalizer filter. Depending on whether the output signal has been under- or over-compensated, the feedback control signal increases or decreases, such that after a reasonable time the feed-back control signal converges to a value where matched compensation is reached. The control loop is formed by a first means for measuring a short-term-amplitude signal of the output signal, a second means for measuring a long-term-amplitude signal of the output signal and a comparator means for comparing the short-term-amplitude signal and the long-term-amplitude signal, and for determining the evolution of the feed-back control signal.

US-5,841,810 describes a way to arrange multiple adaptive filter stages in an adaptive filter. The plurality of filter stages have a common equalisation control signal that has a magnitude that corresponds to the communications path transfer function, with each adaptive filter stage transfer function being an approximate inverse of a transfer function that corresponds to a portion of the input data signal communications path. The compensation thus is based on the ideal transfer function of the communications path.

US-2002/0034221 discloses a communications receiver that has multiple stages each having a transfer function 1 +Kᵢ[fᵢ(jω)], wherein the Kᵢ vary with a sequential gain control methodology. This document thus teaches to compensate by making a sum per stage of the unity input signal linearly added to a function that has higher frequency gain. This known method makes multiple tuning signals in circuitry using many comparators and is relative complex. It is not suited for low voltage operation nor for implementation on a small chip area using small transistors that have large input offset mismatches.

PCT/EP04/001414, co-pending herewith, describes how to organise an adaptive equalizer filter with multiple stages that can operate at low-voltage, and whereby the stage that is being tuned can operate in a non-linear way, still giving sufficient restoration of a transmitted digital data signal. Multiple tuning circuits generate tuning signals. Each tuning signal can typically induce higher frequency gain up to a limited level, e.g. +5dB, at the upper data frequency for compensation of high frequency losses in the connected transmission channel. Several tuning signals can tune one adaptive amplifying compensation stage. In its adaptive amplifying compensation stage the tuning signal can generate through its tuning function, non-linear small-signal and large-signal transfer behaviour. However, by limiting the amount of higher frequency gain to maximum +8dB per tuning function, and by having only one tuning function active at a time the resulting deterministic jitter remains tolerable.

A difficulty with the above mentioned state-of-the-art adaptive and self-adaptive equalizer filters and systems is that they estimate the losses in the channel and then compensate these losses by matched complementary amplification. The precision with which this loss-level is being estimated and with which the compensation is being set, largely determines the quality of the restored bit-stream at the output of the adaptive equalizer filter in terms of achieved jitter performance.

The above described prior art adaptive and self-adaptive equalizer filters only teach how a multi-stage equalizer system can be conceived that compensates signal modifications introduced by a transmission channel for a limited number of different types and lengths of transmission channels.

### Summary of the invention

It is an object of the present invention to provide equalizing filtering apparatus and methods allowing compensation of signal modifications introduced by a transmission channel for a large variety of transmission channels. The above objective is accomplished by a method and device according to the present invention.

The invention relates to an equalizer filter for compensating a received distorted signal for frequency dependent signal modifications introduced by a transmission channel, the received signal having an amplitude, the filter comprising at least one amplifying compensation stage comprising amplifier means having a gain and a saturation level, the gain being monotonically rising for at least a last decade in frequency below an upper data frequency of the received signal, and gain control means for controlling the gain of the amplifier means, such that the amplitude of the received signal amplified in the at least one amplifying compensation stage remains below the saturation level of the amplifier means. The at least one amplifying compensation stage may preferably be at least two compensation stages. The equalizer filter may allow for overcompensation up to 3dB, preferably up to 10dB, more preferably up to 20dB. The upper data frequency may be at least half the data bandwidth, preferably 60% of the data bandwidth, more preferably 70% of the data bandwidth. In the equalizer filter, each of the at least one amplifying compensation stage may be provided for receiving at least one gain control signal wherein the gain control means may comprise at least one gain regulating circuit for providing at least one gain control signal to each of said at least one amplifying compensation stage.

The gain control means may furthermore comprise a feed-back connection between the output node of an amplifying compensation stage and the gain regulating circuit for providing feed-back to said gain regulating circuit. The amplifying compensation stage may be the one that is reached the latest by the signal. Alternatively, the operation of the gain regulating circuit may be based on a replica biasing technique. The gain regulating circuit may comprise a replica of the amplifying compensation stage(s) for which it provides a gain control signal.

The gain control signals may be provided in parallel to each of the at least one amplifying compensation stage(s). The gain control means may furthermore comprise a second gain regulating circuit, to sequentially turn on said at least one amplifying compensation stage(s) until the matching compensation is obtained. The gain control means may furthermore also comprise a second gain regulating circuit, to sequentially turn on said at least one amplifying compensation stage(s) until overcompensation is reached as a target compensation level. The gain control means may furthermore comprise a feed-forward circuit, to determine how many of the available at least one amplifying compensation stages need to be turned on to obtain optimum compensation.

The invention also relates to an equalizer system for compensating a received distorted signal for frequency dependent signal modifications introduced by a transmission channel, said equalizer system comprising an equalizer filter according to the present invention as described above. Thus, the invention relates to an equalizer filter as described above incorporated in an equalizer system for compensating a received distorted signal for frequency dependent signal modifications introduced by a transmission channel.

The invention also relates to a method for compensating a distorted signal for frequency dependent signal modifications introduced by a transmission channel, the signal having an amplitude, the method comprising receiving a distorted signal, compensating said distorted signal and outputting a compensated signal, whereby compensating comprises providing a gain which is monotonically rising for at least a last decade in frequency below an upper data frequency of the received distorted signal, the gain being adapted so as to keep the amplitude of the signal below a saturation level of an amplifier means, and amplifying the received signal in the amplifier means using the provided gain. The compensating may allow overcompensating up to 3dB, preferably up to 10dB, more preferably up to 20dB.

The upper data frequency may be at least half the data bandwidth, preferably 60% of the data bandwidth, more preferably 70% of the data bandwidth.

The compensating may be performed in at least one amplifying compensation stage, wherein providing a gain comprises providing a gain control signal in parallel to each of said at least one amplifying compensation stages. The compensating preferably may be performed in at least two amplifying compensation stages.

Providing a gain may comprise determining a gain based on a replica biasing technique.

Amplifying the received signal may comprise sequentially turning on said at least one amplifying compensation stage until the optimum compensation is obtained. Amplifying the received signal may furthermore comprise determining how many of the available at least one amplifying compensation stages need to be turned on using a feed-forward loop to obtain an optimum compensation.

It is an advantage of the present invention that the devices and methods for equalizing provide a margin for the compensation in two directions around a target compensation level, the target compensation level being about halfway between matched compensation and overcompensation by at least several dB.

It is an advantage of the present invention that the relaxation of the required tolerance on the compensation level considerably improves the robustness and data-restoration capability of equalizer filters including that of fixed, programmable, and self-adaptive equalizer filters.

It is an advantage of the present invention that the amount of compensation required for reliable data restoration extends from exact compensation to overcompensation by at least several decibels.

It is an advantage of the present invention that both matched compensation and overcompensation can be performed in each stage of the equalizer filter.

Although there has been constant improvement, change and evolution of devices in this field, the present concepts are believed to represent substantial novel improvements, including departures from prior practices, resulting in the provision of more efficient devices of this nature.

The teachings of the present invention permit the design of improved equalizer filters and equalizer filtering methods for use in multistage equalizer systems which provide restoration of data signals transmitted over a communication channel showing high frequency attenuation behaviour. More in particular, structures and methods are provided that deliver enhanced tuning tolerance due to the allowance of overcompensation by several decibels.

These and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 shows a schematic representation of an equalizer filter with multiple amplifying compensation stages and a gain control loop according to a first embodiment of the present invention
Figs. 2a to 2e show simulated eye diagrams for an input signal that has been communicated over 50 m coax (at 1.5 Gbps) at different nodes in an equalizer filter as shown in Fig. 1.
Figs. 3a to 3e show simulated eye diagrams for an input signal that has been communicated over 0 m coax (at 1.5 Gbps) at different nodes in an equalizer filter as shown in Fig. 1.
Fig. 4 shows a gain regulating circuit using a replica biasing principle as can be used in equalizer filters according to the present invention.
Fig. 5a shows an equivalent electrical circuit of an amplifying compensation stage for use in an equalizer filter according to an embodiment of the present invention.
Fig. 5b shows the influence of the signal provided at a gain input terminal on the filtering transfer behaviour of the amplifying compensation stage as shown in Fig. 5a.
Fig. 6 shows an equivalent electrical circuit of an amplifying compensation stage having a gain input terminal and a higher frequency gain tuning input according to an embodiment of the present invention.
Fig. 7 shows a schematic representation of an equalizer filter having a second self-adapting compensation control loop according to an embodiment of the present invention.
Fig. 8 shows a schematic representation of an equalizer filter based on a self-adapting feed-forward mechanism according to an embodiment of the present invention.
Fig. 9a shows a measured eye diagram at the output of an equalizer filter of the present invention with fixed compensation, restoring the signal after 50 m of coax.
Fig. 9b shows a measured eye diagram at the output of an equalizer filter of the present invention with the same fixed compensation as in Fig. 9a, restoring the signal after 1 m of coax.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

It is to be noticed that the term "comprising", used in the claims, should not be interpreted as being restricted to the means listed thereafter. Thus, the scope of the expression "a device comprising means A and B" should not be limited to devices consisting only of components A and B. It means that with respect to the present invention, the only relevant components of the device are A and B.

Similarly, it is to be noticed that the term "coupled" should not be interpreted as being restricted to direct connections only. Thus, the scope of the expression "a device A coupled to a device B" should not be limited to devices or systems wherein an output of device A is directly connected to an input of device B. It means that there exists a path between an output of A and an input of B which may be a path including other devices or means.

The invention will be described by a detailed description of several embodiments of the invention. It is obvious that other embodiments of the invention can be configured by a person skilled in the art without departing form the true spirit or technical teaching of the invention, the invention therefore being limited only by the terms of the appended claims. It will be clear for a person skilled in the art that the present invention is also applicable to similar circuits that can be configured in any transistor technology, including for example, but not limited thereto, CMOS, BICMOS and SiGe BICMOS. It will furthermore be clear that similar merits of the invention can be obtained when single-ended signals are implemented as differential signals and vice-versa, without departing from the true spirit of the invention.

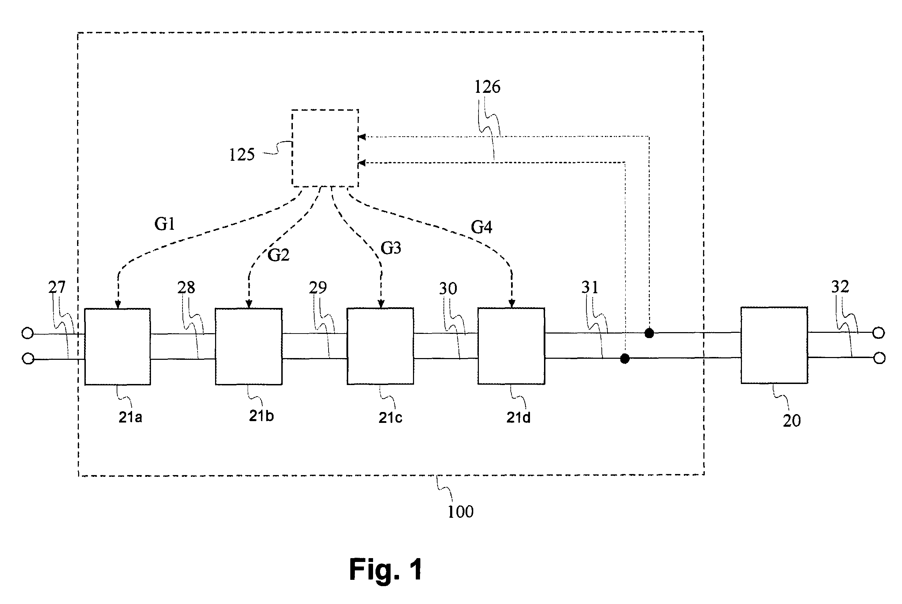

In a first embodiment, the invention relates to an equalizer filter 100 as schematically shown in Fig. 1 which achieves an allowable overcompensation with a limited amount of jitter. Jitter is the unwanted variations of a binary signal's leading and trailing edges. It occurs as the signal is processed or transmitted over a transmission channel from one point to another. Jitter also is a time displacement, either periodic or random, of a signal's switching edges. Excessive jitter always increases the bit-error rate (BER) in the transmission system. As a result, most serial data-communications systems have jitter standards that must be met to ensure robust performance and the quality of service (QoS) expected in today's networks. The filter may be used in suitable electronic device, e.g. in a modem pr receiver of a telecommunications device.

The equalizer filter 100 shows a cascade of amplifying compensation stages 21a, 21b, 21c, 21d of a multi-stage equalizer system. The compensation stages 21a, 21b, 21c, 21d are coupled in series in cascade. The number of amplifying compensation stages 21a, 21b, 21c, 21d depends on the wanted or required total compensation to be reached, and can differ from application to application. This number also depends on the used circuit integration technology. Therefore, although - by way of example - an equalizer filter 100 is shown having four amplifying compensation stages 21a, 21b, 21c, 21d, the invention is not limited thereto. The amplifying compensation stages 21a, 21b, 21c, 21d can be any type of suitable compensation stages, i.e. compensation stages with a fixed higher frequency gain compensation, programmable compensation stages, tunable compensation stages, ... Some explicit - non-limiting - examples will be given in more detail further in the description. Amplifying compensation stages 21a, 21b, 21c, 21d typically show a frequency gain which increases with increasing frequency, further called higher frequency gain, at least to an upper data frequency. The upper data frequency is at least half the data bandwidth or communication bit rate. For example, a 1.5 Gbps data bandwidth has an upper data frequency Fᵤ of 750 MHz or higher. The frequency gain can e.g. be between 1 dB and 30 dB per stage, preferably between 3 dB and 15 dB per stage, for a data rate of 1.5 Gbps. For Low-voltage equalizer filters, it is recommended in PCT/EP04/001414 to limit the frequency gain or compensation level per stage to a lower value, e.g. to 5 dB. The data rate of the input signal that can be received by an equalizer filter 100 may typically be within the range 1 Mbps and 100 Gbps. Typically, a signal is supplied to the equalizer filter 10 that has more or less suffered from frequency attenuation from a transmission channel with limited bandwidth characteristics, whereby higher frequencies are more attenuated than lower frequencies. The input signal is inputted in the equalizer filter 100 at input node 27, which serves as the differential input node of the amplifying compensation stage 21a.

In order to be able to illustrate the compensation behaviour of the equalizer filter 100 and the effect of the different compensation stages 21a, 21b, 21c, 21d, intermediate nodes 28, 29, 30 and 31 are defined between compensation stages 21a and 21b, compensation stages 21b and 21c, compensation stages 21c and 21d and compensation stage 21d and output circuit 20 respectively. Output circuit 20 has an output node 32 and can include any useful stage following an equalizing filter in an equalizer system, including but not limited to a bit-slicer, a limiting amplifier, a DC-restoring system or a Schmitt-trigger, and possibly an output driver stage, all known by a person skilled in the art. The output circuit 20 together with the equalizer filter 100 are part of an equalizer system. This output circuit 20 may be provided to compensate amplitude variations obtained by equalizing, at the expense of very little or no additional jitter. It is a specific feature of the present invention that the equalizer filter 100 furthermore is adjusted to achieve allowed overcompensation with a limited amount of jitter. The amount of allowed overcompensation reaches up to 5 dB, preferably up to 10 dB, more preferably up to 15 dB, keeping jitter below 0.3 UI. The units of jitter measurement are picoseconds peak-to-peak (ps p-p), rms, and percent of the unit interval (UI). The p-p measurement states the maximum to minimum amount of time deviation, usually in picoseconds. A jitter measurement can also be the p-p average over a 30 or 60 s duration, or over, say, 10,000 cycles. Rms jitter is one standard deviation (σ) of the p-p jitter value where the distribution is Gaussian in nature. Jitter also is expressed as a percentage of time compared to the UI or one bit time. For example, one UI at 10 Gbits/s is 100 ps. A jitter specification might be 40 mUI, meaning 4 ps. For equalizer circuits a total jitter level of 0.3 UI is generally accepted, however this can be somewhat more or less, depending on the quality of the attached resampling system and on the expected jitter level due to other sources of jitter, like cross-talk or ground bounce effects. Conditions to be fulfilled to achieve allowed overcompensation with a limited amount of jitter, and thus fulfilled by the equalizer filter of the present invention, are twofold. A first condition is that the amplitude of the analog signals that carry data, including their signal peaks, in all stages will not pass beyond the saturation level of the amplifiers, neither in the internal data-nodes, nor at the output nodes of each stage. This condition has to be met in as well the matched compensation situation as in the envisaged range of overcompensation where acceptable low additional jitter has to be reached. A second condition is that the higher frequency gain in each of the amplifying compensation stages must always be increasing for at least the last decade in frequency below the upper data frequency of the signal. If these conditions are fulfilled, over compensation with only limited amount of jitter can be obtained. If the latter condition is difficult to reach because of bandwidth limitations, the number of stages in the equalizer filter is increased, and the maximum amount of compensation per stage is lowered, making it easier to achieve the higher frequency gain condition. The first condition should be met for all process and temperature variations that an integrated circuit technology can reach, and the impact of these variations on the devices' parameters should be taken into account. Further, the targeted range of transmit amplitudes at the transmitter side of the channel has to be taken into account as well. For example, a range of 250 mV to 1.5 V can be specified for the differential peak-to-peak transmit amplitude. Higher transmit amplitudes than 1.5 V can be covered as well, however, one would generally not transmit too high amplitudes for EMI reasons. Lower transmit voltages than 250 mV can be covered as well, however only as far as signal to noise ratio permits.

It is a specific feature of the present invention that the two conditions, through which equalizing including overcompensation with a limited amount of jitter is obtained, are met in a relatively easy way due to the presence of gain control means. The gain control means may be any suitable means for controlling the gain that allows to considerably relax the non-saturation condition. The gain control means may e.g. be at least one gain regulating circuit 125. This at least one gain-regulating circuit 125 generates a gain control signal G1... G4 for at least one of the amplifying compensation stages 21a, 21b, 21c and 21d and provides it to a gain input terminals (not shown) of the at least one amplifying compensation stage 21a, 21b, 21c and 21d. The gain regulation may be dependent on the output signal of the equalizer filter 100, e.g. by providing feed-back of the output signal at node 31 to the gain-regulating circuit 125 through feed-back connection 126. The applied gain control signal G₁, G₂, G₃, G₄ applied to the gain input terminal (not explicitly shown in Fig. 1) of an amplifying compensation stage 21a, 21b, 21c, 21d influences the gain of that amplifying compensation stage 21a, 21b, 21c, 21d substantially equal over the used frequency range. To further facilitate design and considerably enhance robustness, it is a preferred choice to have a gain input terminal (not shown in Fig. 1) at each amplifying compensation stage 21a, 21b, 21c, 21d, so that a gain control signal G₁, G₂, G₃, G₄ can be provided in parallel to each of the amplifying compensation stages 21a, 21b, 21c, 21d. Most easily the amplifying compensation stages 21 a, 21 b, 21 c, 21 d are driven with the same signal for the cascaded set of stages. In other words, gain control signals G1...G4 can be the same. On the other hand, the gain control signals G1... G4 also can be different for each amplifying compensation stage 21a, 21b, 21c, 21d. Gain regulating circuit 125 can be designed by a person skilled in the art, envisaging the auto-gain option. In this way the gain will be continuously adapted based on the signal amplitude of one of the outputs of the amplifying compensation stages 21a, 21b, 21c, 21d.

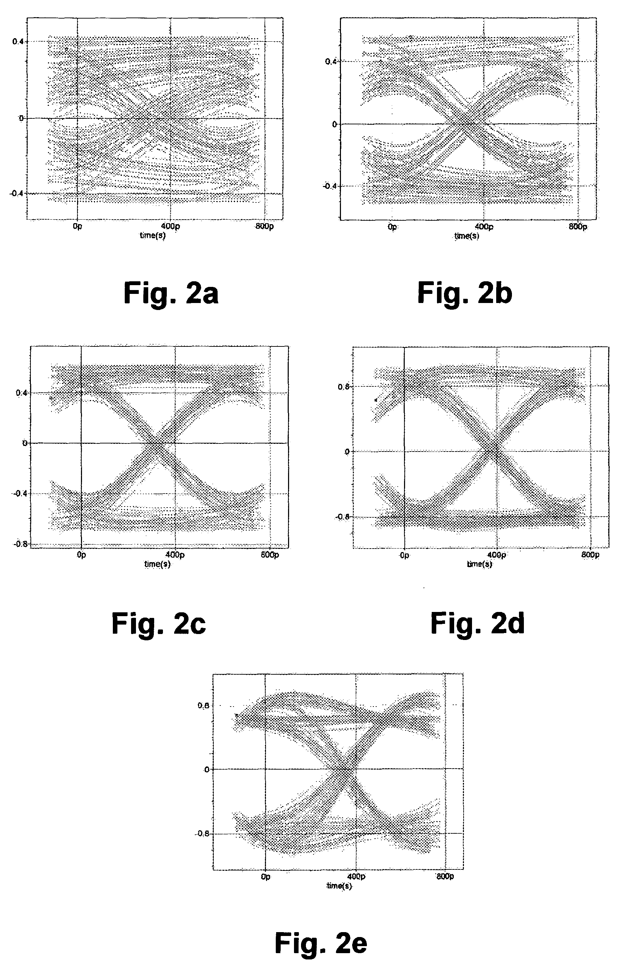

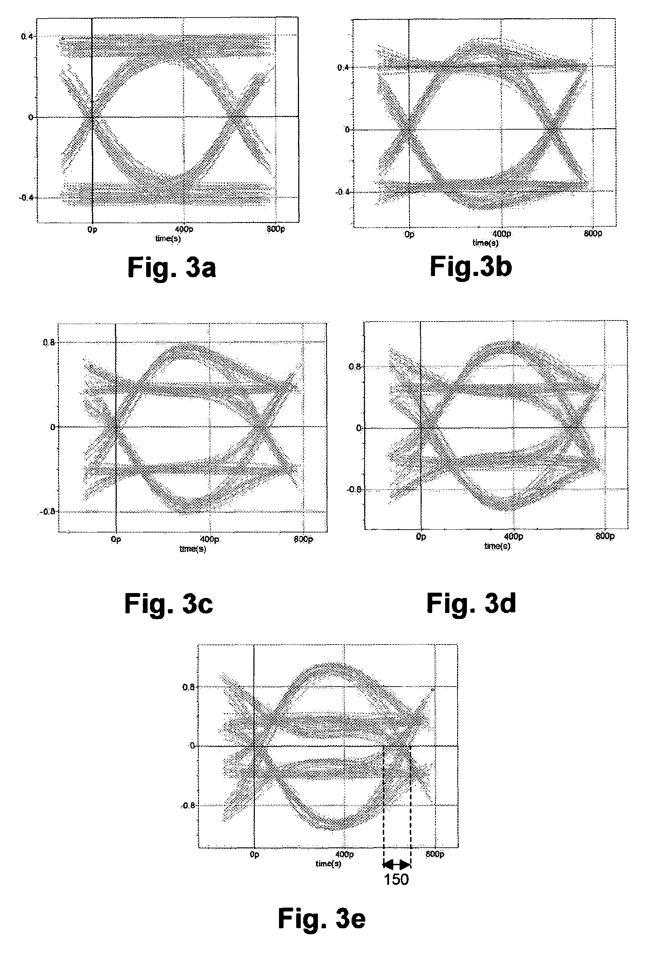

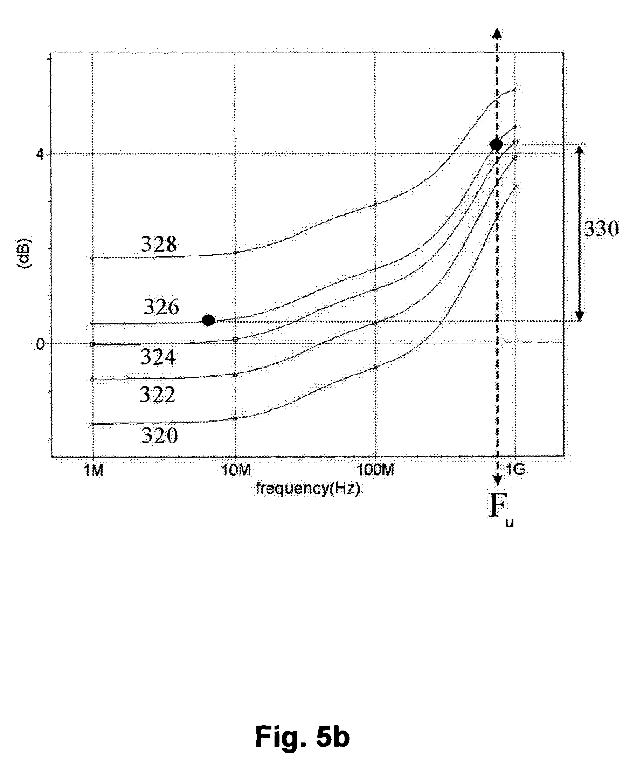

In order to illustrate the effect of the presence of the at least one gain regulating circuit 125 and the feed-back connection 126 on the jitter if overcompensation is achieved, two examples are shown for a given set of operating conditions, i.e. in identical operating conditions but for a specific signal sent through a coax cable having different cable lengths. Fig. 2a to Fig. 2e show the eye diagrams of a simulation whereby as an input signal on node 28, the measured output of a 50 m coax cable has been taken having at its input an non-retum to zero (NRZ), pseudo random signal at 1.5 Gbps. Fig. 2a shows this signal in EYE-diagram form. The resultant EYE-diagrams at the output of stages 21a, 21b, 21c and 21d, being nodes 28... 31 are given by Figs. 2b...2e, for a given set of conditions for the equalizer filter 100, as set out below. Fig. 3a to Fig. 3e show the eye diagrams of a simulation whereby as an input signal on node 28, the measured output of a 0 m coax cable has been taken having at its input an non-return to zero signal (NRZ) at 1.5 Gbps. The 0 m length actually is a coax of the order of centimeter length; however, for the purpose of clarity it is called 0 m length coax. Fig. 3a shows this signal in EYE-diagram form. The resultant EYE-diagrams at the output of stages 21a, 21b, 21c and 21d, being nodes 28... 31 are given by Figures 3b... 3e, for the same set of conditions for the equalizer filter 100, as set out below, also having a rate of 1.5 Gbps. It will be obvious for a person skilled in the art that, although the simulations have been performed for an exemplary set of conditions for the equalizer filter 100 and for specific input signals, these operation conditions for the equalizer filter 100 are only used by way of illustration and that the invention is not limited thereby. The simulations are obtained with the following set of conditions for equalizer filter 100: the amplifying compensation stages 21 a, 21 b, 21 c, 21 d have a fixed higher frequency gain compensation of about 3.5 dB per stage at 750 MHz compared to 0 MHz for the data-rate of 1.5 Gbps. This fixed frequency gain 300 is e.g. shown in Fig. 5B. Each amplifying compensation stage 21 a, 21 b, 21 c and 21 d receives at its gain input terminal a gain control signal G1...G4, respectively, generated by the gain-regulating circuit 125. In the example leading to the simulations of Figs. 2a-2e and Figs. 3a-3e, this gain regulation is made dependent on the output signal at the intermediate node 31 between the last amplifying compensation stage 21 d and output circuit 20, via feed-back connection 126, as represented in Fig. 1. For these simulations the gain control signals G1...G4 are tied together, operating the gain control for the different amplifying compensation stages 21 a, 21 b, 21c, 21d in a parallel way. The gain regulating circuit 125 detects, in the present embodiment, the peak amplitude of the signal at the output node of the last amplifying compensation stage 21 d by means of feed-back connection 126, and regulates the gain control signals G1... G4 following automatic gain principles as known by a person skilled in the art. When the detected peak amplitude is too low, the gain control signals G1... G4 are increased, thereby eventually increasing the amplitude of the signal at the output node of the last amplifying compensation stage 21 d. Vice versa, when the peak amplitude at the output node of the last amplifying compensation stage 21 d becomes too high, the gain control signals G1...G4 are decreased, lowering the amplitude at the output node of the last amplifying compensation stage 21 d. The eye diagrams shown in Fig. 2a to Fig. 2e and Fig. 3a to Fig. 3e allow to analyse the transition time deviations of a digital communication signal. The deviations, also known as jitter, are a measure of the signal quality obtained and they represent the variance in the actual transition time from the ideal transition time. In addition to jitter, an eye diagram can also produce information on the voltage swing, the rise time, and the fall time of the signal. Jitter is apparent when a repetitive waveform is displayed versus a reference waveform. In both Figs. 2a-2e and Figs. 3a-3e, the differential starting amplitude is about 800 mV peak-to-peak, as can be seen at the eye diagrams of the signals at input node 27 in Fig. 2a and Fig. 3a respectively. By going through the eye diagrams of the signal at intermediate nodes 28, 29, 30, and 31, one can see that the differential peak amplitude gradually increases up to about 1750 mV. In this case a 1750 mV is preferred, since it is a little smaller than the maximum differential output of 2000 mV that can be supported in each of the amplifying compensation stages without going into saturation at one of the nodes' data-signals and without running into clipping of signals on these nodes. Clipping of data-signals is detrimental for the capability to overcompensate without generating an excessive amount of deterministic jitter. Data-signals are signals on nodes in the high-speed data path leading to the high speed data recovery of the equalizer filter 100. The given coax has -10 dB of loss at 750 MHz. This means that HIGH-LOW-HIGH-LOW transitions in a 1.5 Gbps data-stream will be attenuated by a factor of 3.16 (equalling -10dB). The eye diagram after compensation with three amplifying compensation stages 21a, 21b, 21c, whereby each stage is compensating 3.5 dB totalling 10.5 dB of compensation up to intermediate node 30, shows that a wide open eye diagram is obtained at this intermediate node 30 (see Fig. 2d). After the last stage 21d, at intermediate node 31, an overcompensation of 4 dB is present without too much increase in jitter, as can be seen in Fig. 2e. The 0 m coax, i.e. the zero length case shows an initial attenuation of -3 dB at 1.5 Gbps, as can be seen from the High-Low-High-Low transitions attenuated by a factor of about 0.7 of total amplitude. This attenuation can be e.g. caused by some connector and/or bondwire attenuation. The subsequent eye diagrams as shown in Fig. 3a to Fig. 3e show four times an amplitude-increase of 3.5 dB at the upper data frequency Fᵤ, a frequency corresponding to the highest HIGH-LOW-HIGH-LOW transitions, starting from the open eye at the input node 27 (Fig. 3a) up to the output of the last amplifying compensation stage 21d at intermediate node 31. In total, the amplitude increase thus is +14 dB. This is leading to an effective overcompensation of 11 dB, when starting at -3 dB. However, even though having this strong overcompensation, only limited deterministic jitter 150 is present at the output of the last stage 21d (indicated in Fig. 3e). This is made possible in this case by the auto-gaining mechanism together with the given design construction. Both together cause the output signal of the amplifying compensation stages 21a, 21b, 21c, 21d to be increased gradually from stage to stage, up to the last amplifying compensation stage 21d, whereby at the output of the last stage, the differential peak-to-peak level is reached of about 1750 mV, a level that is below saturation level. By having similar stages, and knowing that the stages are all equal, a gradual increase of peak-to-peak output amplitude is in this example obtained whereby it is ensured that with high certainty no data-signal node in any stage can get into saturation. All coax lengths in-between 0 m and 50 m can be connected as well and their output signal can get restored successfully, resulting in intermediate situations, i.e. generating eye diagrams in between those from Figs. 2a-2e and Figs. 3a-3e. It can be seen that in some cases even an overcompensation tolerance of more than 10 dB can be achieved when implementing the details of the present invention thoughtfully. From these simulations the advantage of the invention becomes apparent. A large set of cable lengths can be connected without having to estimate the amount of required compensation. More in general, the examples illustrate that the equalizer filters and the corresponding equalizer systems and methods of equalizing, allow to provide equalizing for a wide variety of cables and cable lengths, without the need for estimating the amount of compensation required. No higher frequency gain tuning system is required. It can be sufficient to generate only gain control signals. These gain control signals can be fixed or variable in time. It is important to mention that variations on such gain control signals G1... G4 generate very little additive jitter. A change in gain, independent of the frequency in the considered frequency range, generally merely influences the overall amplitude of the eye-diagram, and has very little influence on the position of the zero-crossings of the regenerated output pattern at intermediate node 31. This is true as long as there are no data-signal nodes that go into saturation. In case of such amplitude fluctuations, subsequent output circuit 20 can compensate this type of eye diagram variation by implementing e.g. a limiting amplifier or Schmitt-trigger, at the expense of very little or no additional jitter. This insensitivity of gain control signals to jitter is important, since jitter addition lowers the subsequent signal recovery quality in terms of bit-error-rate. In other words, in the present embodiment a gain regulating circuit 125 may be provided that by an auto-gain principle ensures a fixed amplitude at the output of one of the amplifying compensation stages 21a, 21b, 21c, 21d, preferably at the last stage, so that wide operating conditions are allowed, including for example also a large amplitude signal transmit range. By checking and controlling during careful construction it can be ensured that the non-saturation requirement gets fulfilled for all data-nodes in all amplifying gain stages 21a, 21b, 21c, 21d.

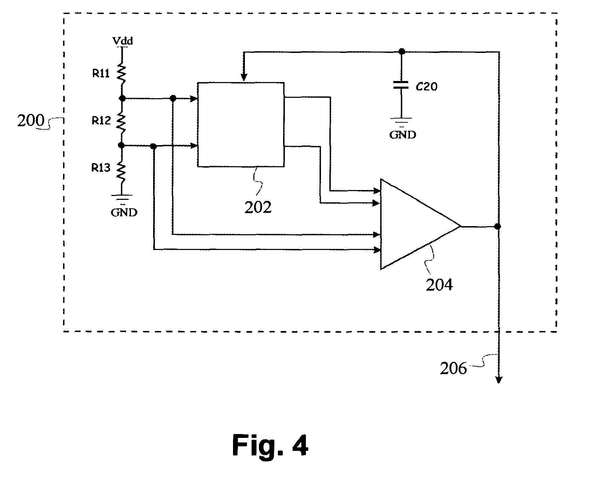

In a second embodiment, an equalizer filter is described which preferably is used in cases where mainly process and temperature variation have to be considered, whereby, for example, the transmit amplitude is known beforehand. The equalizer filter comprises the same components and features as described in the first embodiment, but the gain regulating circuit 125 for generating gain control signals G1... G4 is chosen to be a replica biasing technique based gain regulating circuit 200, such that the feed-back connection 126 from the intermediate node 31 between the last amplifying compensation stage 21 d and the output circuit 20 does not need to be present. An example of a replica biasing technique based gain regulating circuit 200 is shown in Fig. 4. Inside this circuit 200, a replica stage 202, being a replica of one of the amplifying compensation stages 21a, 21b, 21c, 21d is biased under similar conditions, with a known DC input voltage determined by resistor R11, resistor R12 and resistor R13, whereby the DC output of replica stage 202 is compared with its DC input by means of comparator 204. In this way, a unity gain can be obtained, independent of process parameters or chip temperature. The capacitor C20 is provided to make the node to which it is attached the dominant-pole-node in the regulating feedback loop. A designer skilled in the art can as well easily obtain another fixed gain value just by having an additional voltage divider at one of the differential inputs of the comparator 204. A fixed DC amplification by e.g. a factor of 1.3 per stage can hence be achieved. By outputting a gain-determining signal 206 from the comparator 204, and applying it to the gain input terminal (not shown explicitly) of the corresponding amplifying compensation stage 21a, 21b, 21c, 21d, a signal is present for replacing the gain control signals G1...G4 of the cascade of amplifying compensation stages 21a, 21b, 21c, 21d. The same gain-determining signal 206 is also applied to the replica stage 202, so as to make the replica stage 202 change the same way as the replicated amplifying compensation stage 21a, 21b, 21c, 21d. This replica-biasing solution is only the preferred choice of implementation of the present invention, when for one reason or another, the continuously updating auto-gain function is hindering specified operating conditions. This can be the case, for example, when the incoming data has to be recovered from the first bit on, and whereby there would be no time for an auto-gain loop to converge to its end-value. In other words, the use of a gain regulating circuit based on replica biasing techniques allows to drive gain input terminals of each amplifying compensation stage 21a, 21b, 21c, 21d and thus to achieve for all data-nodes including the output nodes in all stages, an operation in non-saturation mode, for all process and all temperature ranges.

In the following description more explicit examples of amplifying compensation stages 21a, 21 b, 21c, 21d that can be used in the different embodiments of the present invention are given. It will be obvious for the person skilled in the art that other amplifying compensation stages 21a, 21b, 21c, 21d, having a different electronic circuit, can be used or that, for a given circuit, the values of the different components used can differ.

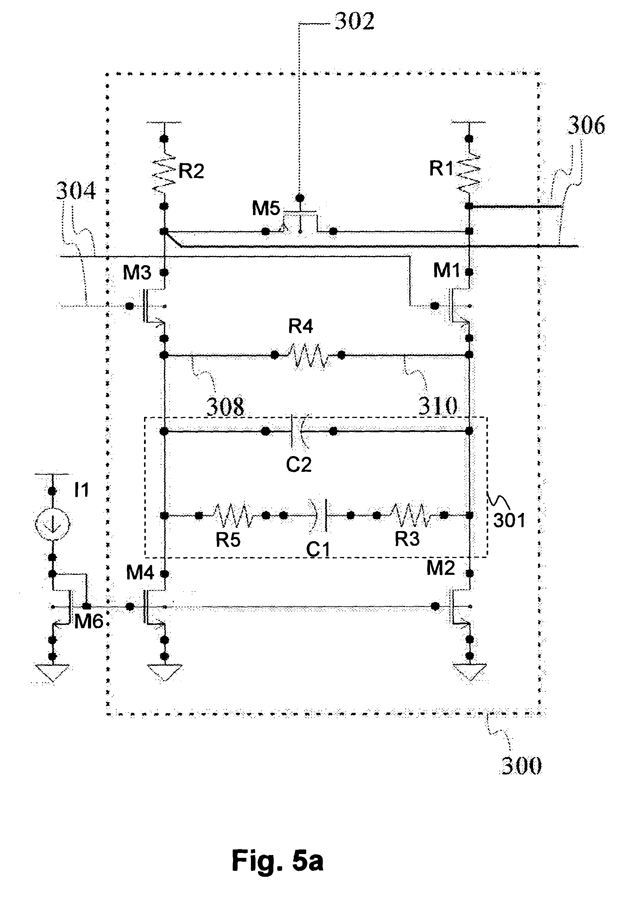

Fig. 5a shows an amplifying compensation stage 300 with a higher frequency gain which is fixed in time for each frequency but increasing for higher frequencies. The amplifying compensation stage 300 receives an input signal between differential input data nodes 304, and generates an output signal between differential output data nodes 306. The transistors M3 and M1 function as source followers that are biased by the transistors M4 and M2, which e.g. can be transistors, mirroring the current I1. The voltage difference at the input node 304, is substantially taken over between the nodes 308 and 310, thereby determining the current through resistive element R4 at low frequency. The latter current infers a voltage difference over the output node 306, after having been conducted through transistors M3 and M1 with opposite sign. The compensation stage 300 comprises a gain setting circuit 301 for delivering the increasing gain at higher frequencies. The gain setting circuit 301 may for example comprise a parallel connection of, on the one hand, a first capacitive element (capacitor C1) in series with a first resistive element (series connection of resistor R3 and resistor R5) and, on the other hand a second capacitive element (capacitor C2). By way of example, two resistive elements R3 and R5 are shown in Fig. 5a for symmetry reasons, but the invention also operates if only a single resistive element is used. The group of circuit elements 301 form a decreasing impedance for higher frequency, increasing the gain of the stage at higher frequency. The elements R3, R5 and C1 form a zero-pole pair in the filtering behaviour and the capacitor C2 forms a zero in the transfer characteristics. The amplifying compensation stage 300 with fixed higher frequency gain comprises a gain input terminal 302 to which a gain control signal may be applied. In the example illustrated in Fig. 5a, the gate of a transistor M5 forms the gain input terminal 302 of the amplifying compensation stage 300. Transistor M5 will determine the differential output resistance, as it is coupled between the differential output data nodes 306, and influences as such the overall gain of the compensation stage 300. Higher frequency gain at the upper-data frequency Fᵤ typically ranges between 2dB and 15dB per stage. This upper data frequency is indicated by Fᵤ in Fig. 5b. The amplification of the stage is proportional to R2/R4. Fig. 5b shows a graph of the filtering transfer characteristic of the amplifying compensation stage 300, given in decibel (dB). Curves 320, 322, 324, 326, 328 each show higher frequency gain that is ever increasing as from a first value at least 1 decade in frequency below the upper data frequency Fᵤ upto the upper data frequency Fᵤ of 750 MHz. The higher frequency gain at the upper-data frequency Fᵤ for the exemplary stage shown is about 3.5 dB for each of the curves 320 to 328 and is specifically indicated in the graph for curve 326 by the value 330, i.e. the difference between the gain value at the upper data frequency Fᵤ and the gain value at lower frequencies. Curves 320, 322, 324, 326, 328 are the curves for different gain control signals to be inputted in the gain input terminal 302, the gain control signals having an amplitude of 0.6, 0.8, 0.95, 1 and 1.25 V respectively. A higher voltage gives more gain in general. It is to be noted that the gain control signal applied at gain input terminal 302 determines substantially an overall gain on top of the higher frequency gain. This is however not perfect, since the decibel distance between e.g. curve 326 and 328 is not fully constant. At least input node 304, output node 306, internal nodes 308 and 310 are considered to carry data-signals. By way of example, a set of explicit values for the electronic components is given in Table 1.

**Table 1**

| **Component** | **Value** | **Component** | **Value** |
|---|---|---|---|
| Resistor R1 | 3k.Ω | Transistor M1 | 16um/0.35 um |
| Resistor R2 | 3k.Ω | Transistor M2 | 40 um /0.35 um |
| Resistor R3 | 8k.Ω | Transistor M3 | 16 um /0.35 um |
| Resistor R4 | 3k.Ω | Transistor M4 | 40 um /0.35 um |
| Resistor R5 | 8k.Ω | Transistor M5 | 2 um /0.5 um |
| Capacitor C1 | 280F | Transistor M6 | 40 um /0.35 um |
| Capacitor C2 | 100F | | |

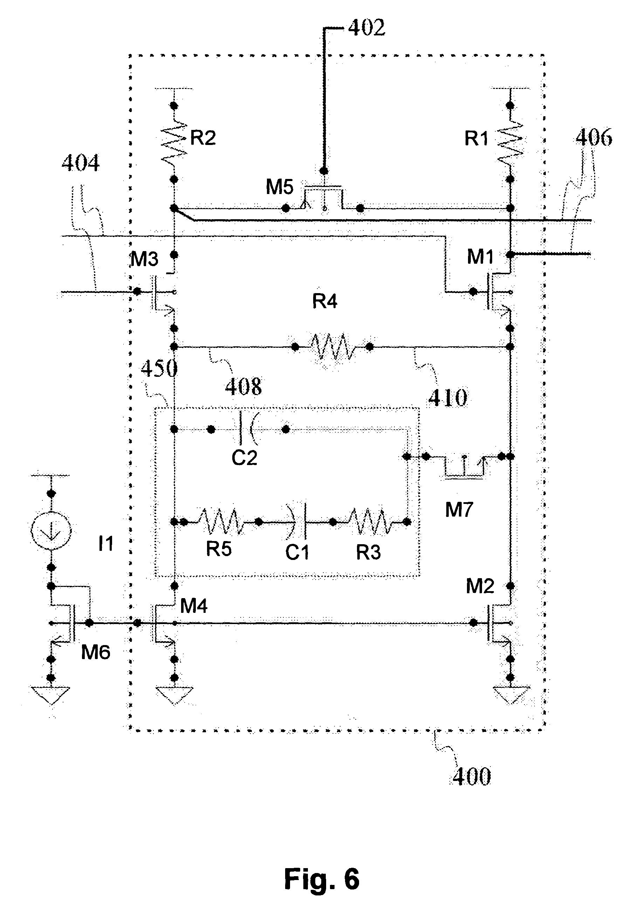

An alternative amplifying compensation stage 400 is shown in Fig. 6. The amplifying compensation stage 400 has a programmable and/or tuneable higher frequency gain function circuit 450 comprising two resistors, i.e. resistor R3 and resistor R5, and a capacitor C1, which are coupled in parallel to capacitor C2, like the circuit in Fig. 5a. The functioning of the amplifying compensation stage 400 is similar to the functioning of the amplifying compensation stage 300, but an additional switching element is provided. By turning on a switching element in series with the higher frequency gain function circuit 450, e.g. transistor M7, the circuit elements grouped as gain function circuit 450, become connected between the sources of transistor M1 and transistor M3, leading to higher frequency gain at the output node 406. When transistor M7 is not conducting, the higher frequency gain disappears. At least input node 404, output node 406, internal nodes 408 and 410 are considered to carry data-signals. By way of example, a set of explicit values for the electronic components are given in Table 2. Other programmable/tuneable amplifying compensation stages are known by the person skilled in the art and can be considered as well for implementing the present invention.

**Table 2**

| **Component** | **Value** | **Component** | **Value** |
|---|---|---|---|
| resistor R1 | 3k.Ω | Transistor M1 | 16um/0.35 um |
| resistor R2 | 3k.Ω | Transistor M2 | 40 um /0.35 um |
| resistor R3 | 8k.Ω | Transistor M3 | 16 um /0.35 um |
| resistor R4 | 3k.Ω | Transistor M4 | 40 um /0.35 um |
| resistor R5 | 8k.Ω | Transistor M5 | 2 um /0.5 um |
| Capacitor C1 | 280F | Transistor M6 | 40 um /0.35 um |
| Capacitor C2 | 100F | Transistor M7 | 16 um /0.35 um |

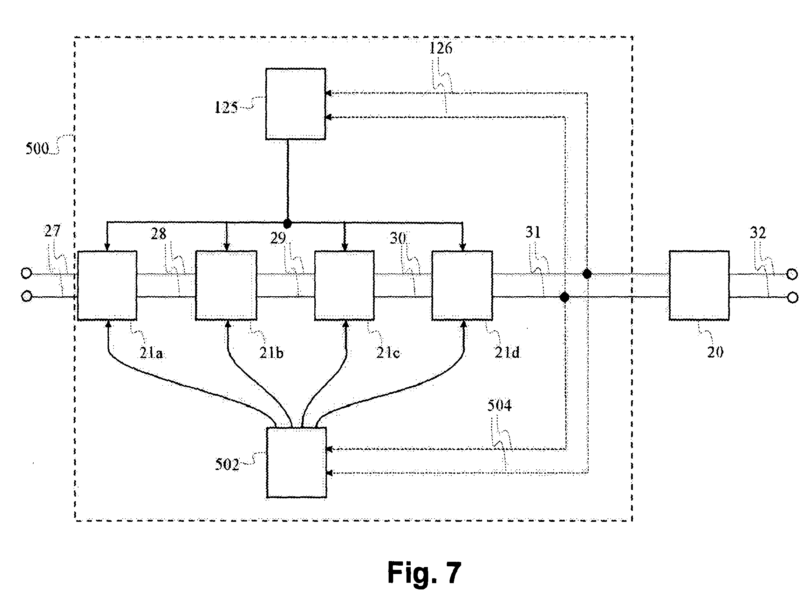

In a third embodiment, the invention relates to a wide range self-adaptive equalizer filter 500. The wide range self-adaptive equalizer filter 500, as shown in Fig. 7 is very robust. The equalizer filter 500 comprises the same components and features of an equalizer filter 100, 200 according to any of the previous embodiments, but the equalizer filter 500 furthermore comprises a second feed-back loop for self adaptation. This second feed-back loop comprises a feed-back circuit 502 and a feed-back connection 504 between an intermediate node 28, 29, 30, 31 positioned after an amplification compensation stage, preferably after the last amplification compensation stage 21 d, and the feed-back circuit 502. The feed-back circuit 502 preferably sequentially turns on amplifying compensation stages 21 a to 21 d until typically matched compensation is reached. For matched compensation typically an error margin of about 1 to 2dB, depending on the level of compensation and compensation conditions, is allowed. In this embodiment, the precision with which the level of compensation has to be determined can be relaxed considerably in this case of self-adaptation. The amplifying compensation stages 21 a, 21 b, 21 c, 21 d that can be used for this embodiment can e.g. be the amplifying compensation stage of Fig. 6 but they are not limited thereto. The amplifying compensation stages need to be always increasing for at least the last decade in frequency below an upper data frequency of the signal. Patent applications EP-02447160 and PCT/EP04/001414, co-pending herewith, describe how to organise the control loop such that matched self-adaptation is achieved possibly with multiple stages, and possibly at lower voltage as well. However, when overcompensation of e.g. 8dB can be tolerated by the equalizer filter 500, instead of always regulating close to ideal compensation, the self adaptive loop can be designed such that e.g. 4dB of overcompensation is envisaged as the regulating target. The realized compensation then has a tolerance of reaching its target compensation value by -4dB to +4dB. This considerably enhances reliability of adaptive equalizer filters, and also improves the yield with which such circuits can be made. Depending on the used technology, data rate and acceptable jitter level for the given application, using the findings of the present invention will allow an overcompensation between at least 3 dB and maximum 20 dB. A 10 dB allowable overcompensation should be within reach for most given realistic situations.

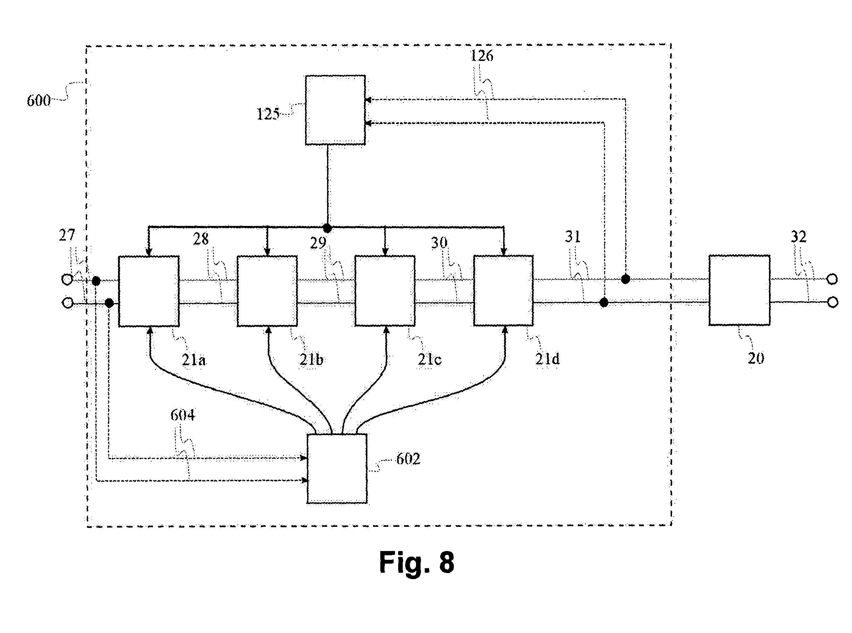

In a fourth embodiment, the invention relates to a self-adaptive equalizer filter 600 as shown in Fig. 8, wherein a large overcompensation is allowed. The equalizer filter 600 comprises the same components and has the same features of the self-adaptive equalizer filters shown in the previous embodiments, but furthermore, the input signal at input node 27 of the equalizer filter 600 is measured and fed to a feed-forward circuit 602 through feed-forward connection 604. Depending on the amplitude or power of this input signal, feed-forward circuit 602 can determine how many of the available amplifying compensation stages 21 a, 21 b, 21 c, 21 d will be turned on and will show higher frequency gain. The achievable higher frequency gain with this system is similar as with the previously described system. Due to the presence of hysteresis in the present equalizer filter 600 having a feed-forward circuit 602, the stability of the system will be improved.

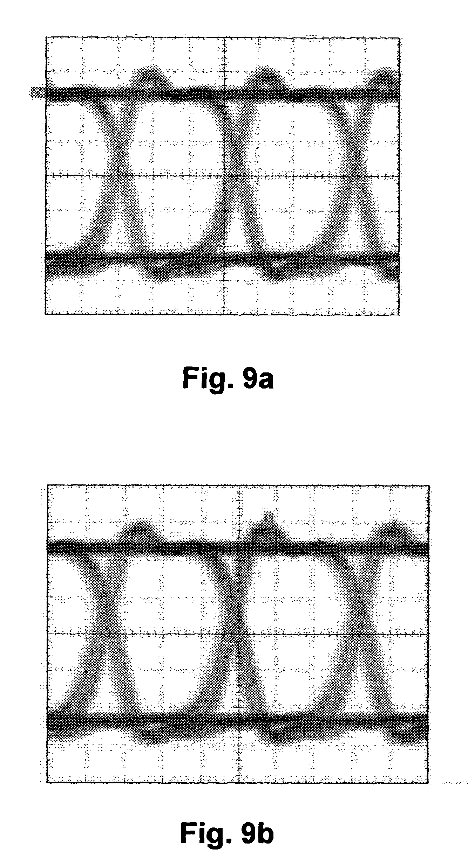

A fifth embodiment of the present invention relates to a CMOS circuit comprising an equalizer filter allowing overcompensation with limited jitter, according to the present invention. The equalizer filter comprises components with the same functionalities and the same features as the equalizer filters of any of the previous embodiments, and whereby the components are made based on CMOS technology. The quality of the CMOS technology based equalizer filter is illustrated in the eye diagrams shown in Fig. 9a and Fig. 9b for signals passing a coax of 50m and 1 m respectively. The measured attenuation by a network analyser of this 50 m cable at 750 MHz is -10dB. The eye diagrams are shown for a CMOS equalizer filter having four amplifying compensation gain stages operating at 1.5 Gbps, a limiting amplifier and an output driver. The compensation is fixed to about 10.5 dB of higher frequency gain, and there is one auto-gain loop that drives the gain control signals for all the stages in parallel. The eye diagram restored by the equalizer for a signal passing a coax of 50m is shown in Fig. 9a, showing very little jitter. The original signal at the input of the equalizer filter corresponds with the eye diagram shown in Fig. 2a. In Fig. 9b, the eye diagram for a signal passing a coax of 1 m is shown, leading internally to large overcompensation with large overshoot peaks like in simulated Figs. 3a-3e. Nevertheless, these overshoot peaks are not harmful since they get filtered out by the applied limiting amplifier. The very small increase in jitter demonstrates the overcompensation allowance following the present invention.

In the above described embodiments, each of the amplifying compensation stages has an amplification versus frequency behaviour that is always increasing with increasing frequency at least for the last decade of frequency up to the upper data frequency, except when the stage's higher frequency gain is turned-off. Furthermore, according to the present invention, the devices operate in non-saturation mode, within the operational range, for all data-nodes including output nodes in all stages, even in the envisaged overcompensation situation whereby acceptable additional jitter is tolerated.

It is to be understood that although preferred embodiments, specific constructions and configurations, as well as materials, have been discussed herein for devices according to the present invention, various changes or modifications in form and detail may be made without departing from the scope and spirit of this invention.

## Claims

1. An equalizer filter (100, 500, 600) for compensating a received distorted signal for frequency dependent signal modifications introduced by a transmission channel, the received signal having an amplitude, said filter (100, 500, 600) comprising
- at least one amplifying compensation stage (21a, 21b, 21c, 21d) comprising amplifier means having a gain and a saturation level, the gain being monotonically rising for at least a last decade in frequency below an upper data frequency of the received signal,
- gain control means for controlling the gain of the amplifier means, such that the amplitude of the received signal amplified in the at least one amplifying compensation stage (21a, 21b, 21c, 21d) remains below the saturation level of the amplifier means (301).

2. An equalizer filter according to claim 1, said equalizer filter allowing for overcompensation up to 3dB, preferably up to 10dB, more preferably up to 20dB.

3. An equalizer filter according to any of the previous claims, wherein said upper data frequency is at least half the data bandwidth, preferably 60% of the data bandwidth, more preferably 70% of the data bandwidth.

4. An equalizer filter according to any of the previous claims, each of said at least one amplifying compensation stage (21a, 21b, 21c, 21d) being provided for receiving at least one gain control signal (G₁, G₂, G₃, G₄) wherein said gain control means comprises at least one gain regulating circuit (125) for providing at least one gain control signal (G₁, G₂, G₃, G₄) to each of said at least one amplifying compensation stage (21a, 21b, 21c, 21d).

5. An equalizer filter according to claim 4, said gain control means furthermore comprising a feed-back connection (126) between the output node of an amplifying compensation stage (21a, 21b, 21c, 21d) and the gain regulating circuit (125) for providing feed-back to said gain regulating circuit (125).

6. An equalizer filter according to claim 5, wherein said amplifying compensation stage (21a, 21b, 21c, 21d) is the one that is reached the latest by the signal.

7. An equalizer filter according to claim 4, wherein the operation of said gain regulating circuit (125) is based on a replica biasing technique.

8. An equalizer filter according to claim 7, wherein said gain regulating circuit (125) comprises a replica (202) of the amplifying compensation stage(s) (21a, 21b, 21c, 21d) for which it provides a gain control signal (G₁, G₂, G₃, G₄).

9. An equalizer filter according to any of claims 4 to 8, wherein said gain control signals (G₁, G₂, G₃, G₄) are provided in parallel to each of said at least one amplifying compensation stage(s) (21a, 21b, 21c, 21d).

10. An equalizer filter according to any of claims 4 to 9 wherein said gain control means furthermore comprises a second gain regulating circuit (502), to sequentially turn on said at least one amplifying compensation stage(s) (21a, 21b, 21c, 21d) until matching compensation is obtained.

11. An equalizer filter according to any of claims 4 to 9, wherein said gain control means furthermore comprises a second gain regulating circuit (502), to sequentially turn on said at least one amplifying compensation stage(s) (21a, 21b, 21c, 21d) until overcompensation is reached as a target compensation level.

12. An equalizer filter according to any of claims 1 to 11, wherein said gain control means furthermore comprises a feed-forward circuit (602), to determine how many of the available at least one amplifying compensation stages (21a, 21b, 21c, 21d) need to be turned on to obtain optimum compensation.

13. An equalizer system for compensating a received distorted signal for frequency dependent signal modifications introduced by a transmission channel, said equalizer system comprising an equalizer filter according to any of claims 1 to 12.

14. A method for compensating a distorted signal for frequency dependent signal modifications introduced by a transmission channel, the signal having an amplitude, the method comprising
- receiving a distorted signal,
- compensating said distorted signal
- outputting a compensated signal
whereby compensating comprises
- providing a gain which is monotonically rising for at least a last decade in frequency below an upper data frequency of the received distorted signal, the gain being adapted so as to keep the amplitude of the signal below a saturation level of an amplifier means (301,450)
- amplifying the received signal in the amplifier means (301,450) using the provided gain.

15. A method according to claim 14, said compensating allowing overcompensating up to 3dB, preferably up to 10dB, more preferably up to 20dB.

16. A method according to any of claims 14 to 15, wherein said upper data frequency is at least half the data bandwidth, preferably 60% of the data bandwidth, more preferably 70% of the data bandwidth.

17. A method according to any of claims 14 to 16, said compensating being performed in at least one amplifying compensation stage (21a, 21b, 21c, 21d), wherein providing a gain comprises providing a gain control signal in parallel to each of said at least one amplifying compensation stages(21a, 21b, 21c, 21d).

18. A method according to any of claims 14 to 17, wherein providing a gain comprises determining a gain based on a replica biasing technique.

19. A method according to any of claims 17 to 18, wherein amplifying the received signal comprises sequentially turning on said at least one amplifying compensation stage (21a, 21b, 21c, 21d) until the optimum compensation is obtained.

20. A method according to any of claims 17 to 19, wherein amplifying the received signal furthermore comprises determining how many of the available at least one amplifying compensation stages (21a, 21b, 21c, 21d) need to be turned on using a feed-forward loop to obtain an optimum compensation.

## Amended claims

### Amended claims in accordance with Rule 86(2) EPC.

**1.** An equalizer filter (100, 500, 600) for compensating a received distorted signal for frequency dependent signal modifications introduced by a transmission channel, the received signal having an amplitude, said filter (100, 500, 600) comprising
- at least one amplifying compensation stage (21a, 21b, 21c, 21d) comprising amplifier means having a gain and a saturation level, the gain being monotonically rising for at least a last decade in frequency below an upper data frequency of the received signal,
- gain control means for controlling the gain of the amplifier means, such that the amplitude of the received signal amplified in the at least one amplifying compensation stage (21 a, 21 b, 21 c, 21 d) remains below the saturation level of the amplifier means (301)
**characterised in that** the equalizer filter is adapted for allowing said compensating to be overcompensating.

**2.** An equalizer filter according to claim 1, wherein said overcompensating comprises overcompensating up to 3dB, preferably up to 10dB, more preferably up to 20dB.

**3.** An equalizer filter according to any of the previous claims, wherein said upper data frequency is at least half the data bandwidth, preferably 60% of the data bandwidth, more preferably 70% of the data bandwidth.

**4.** An equalizer filter according to any of the previous claims, each of said at least one amplifying compensation stage (21a, 21b, 21c, 21d) being provided for receiving at least one gain control signal (G₁, G₂, G₃, G₄) wherein said gain control means comprises at least one gain regulating circuit (125) for providing at least one gain control signal (G₁, G₂, G₃, G₄) to each of said at least one amplifying compensation stage (21a, 21b, 21c, 21d).

**5.** An equalizer filter according to claim 4, said gain control means furthermore comprising a feed-back connection (126) between the output node of an amplifying compensation stage (21a, 21b, 21c, 21d) and the gain regulating circuit (125) for providing feed-back to said gain regulating circuit (125).

**6.** An equalizer filter according to claim 5, wherein said amplifying compensation stage (21a, 21b, 21c, 21d) is the one that is reached the latest by the signal.

**7.** An equalizer filter according to claim 4, wherein the operation of said gain regulating circuit (125) is based on a replica biasing technique.

**8.** An equalizer filter according to claim 7, wherein said gain regulating circuit (125) comprises a replica (202) of the amplifying compensation stage(s) (21a, 21b, 21c, 21d) for which it provides a gain control signal (G₁, G₂, G₃, G₄).

**9.** An equalizer filter according to any of claims 4 to 8, wherein said gain control signals (G₁, G₂, G₃, G₄) are provided in parallel to each of said at least one amplifying compensation stage(s) (21a, 21b, 21c, 21d).

**10.** An equalizer filter according to any of claims 4 to 9 wherein said gain control means furthermore comprises a second gain regulating circuit (502), to sequentially turn on said at least one amplifying compensation stage(s) (21a, 21b, 21c, 21d) until matching compensation is obtained.

**11.** An equalizer filter according to any of claims 4 to 9, wherein said gain control means furthermore comprises a second gain regulating circuit (502), to sequentially turn on said at least one amplifying compensation stage(s) (21a, 21b, 21c, 21d) until overcompensation is reached as a target compensation level.

**12.** An equalizer filter according to any of claims 1 to 11, wherein said gain control means furthermore comprises a feed-forward circuit (602), to determine how many of the available at least one amplifying compensation stages (21a, 21b, 21c, 21d) need to be turned on to obtain optimum compensation.

**13.** An equalizer system for compensating a received distorted signal for frequency dependent signal modifications introduced by a transmission channel, said equalizer system comprising an equalizer filter according to any of claims 1 to 12.

**14.** A method for compensating a distorted signal for frequency dependent signal modifications introduced by a transmission channel, the signal having an amplitude, the method comprising
- receiving a distorted signal,
- compensating said distorted signal, said compensating comprising providing a gain which is monotonically rising for at least a last decade in frequency below an upper data frequency of the received distorted signal, the gain being adapted so as to keep the amplitude signal below a saturation level of an amplifier means (301,450), and amplifying the received signal in the amplifier means (301,450) using the provided gain; and
- outputting a compensated signal
**characterised in that** said compensating comprises overcompensating.

**15.** A method according to claim 14, said overcompensating being overcompensating up to 3dB, preferably up to 10dB, more preferably up to 20dB.

**16.** A method according to any of claims 14 to 15, wherein said upper data frequency is at least half the data bandwidth, preferably 60% of the data bandwidth, more preferably 70% of the data bandwidth.

**17.** A method according to any of claims 14 to 16, said compensating being performed in at least one amplifying compensation stage (21a, 21b, 21c, 21d), wherein providing a gain comprises providing a gain control signal in parallel to each of said at least one amplifying compensation stages (21a, 21b, 21c, 21d).

**18.** A method according to any of claims 14 to 17, wherein providing a gain comprises determining a gain based on a replica biasing technique.

**19.** A method according to any of claims 17 to 18, wherein amplifying the received signal comprises sequentially turning on said at least one amplifying compensation stage (21a, 21b, 21c, 21d) until the optimum compensation is obtained.

**20.** A method according to any of claims 17 to 19, wherein amplifying the received signal furthermore comprises determining how many of the available at least one amplifying compensation stages (21a, 21b, 21c, 21d) need to be turned on using a feed-forward loop to obtain an optimum compensation.
